Europäisches Patentamt

European Patent Office

Office européen des brevets

(19)

(11) Veröffentlichungsnummer: **0 302 986 B1**

## EUROPÄISCHE PATENTSCHRIFT

(45) Veröffentlichungstag der Patentschrift: **09.10.91**

(51) Int. Cl.⁵: **G01N 17/00**

(21) Anmeldenummer: **88101574.7**

(22) Anmeldetag: **04.02.88**

(54) **Licht- und Wetterechtheitsprüfgerät.**

(30) Priorität: **12.08.87 DE 3726803**

(43) Veröffentlichungstag der Anmeldung:
**15.02.89 Patentblatt 89/07**

(45) Bekanntmachung des Hinweises auf die
Patenterteilung:
**09.10.91 Patentblatt 91/41**

(84) Benannte Vertragsstaaten:
**DE ES FR GB IT**

(56) Entgegenhaltungen:
**DE-A- 2 830 723**
**DE-A- 3 504 793**
**DE-B- 2 014 288**
**DE-C- 3 430 426**

(73) Patentinhaber: **Heraeus Instruments GmbH**
**Heraeusstrasse 12-14**
**W-6450 Hanau am Main(DE)**

(72) Erfinder: **Witt, Jürgen, Dr.**
**Carl-Ulrichstrasse 14**
**W-6452 Hainburg 2(DE)**

(74) Vertreter: **Grimm, Ekkehard**
**Heraeus Holding GmbH Heraeusstrasse 12 -**
**14**
**W-6450 Hanau/Main(DE)**

## Beschreibung

Die vorliegende Erfindung betrifft ein Licht- und Wetterechtheitsprüfgerät mit einer Bestrahlungsanordnung, die eine rohr- oder punktförmige Strahlenquelle aufweist, insbesondere einen Xenonstrahler, deren Kolben von einem rohrförmigen zylindrischen Filter, der für den sichtbaren und UV-Anteil der von der Strahlenquelle abgegebenen Strahlung durchlässig ist und den IR-Anteil der Strahlung selektiv reflektiert, mit Abstand umgeben ist, wobei innerhalb des rohrförmigen Filters mindestens eine IR-Strahlung absorbierende, ebene Fläche vorgesehen ist, deren Ebene in Richtung der Achse des Filters verläuft und wobei die Strahlenquelle außerhalb der Achse des rohrförmigen Filters angeordnet ist.

Ein derartiges Licht- und Wetterechtheitsprüfgerät ist aus DE-PS 20 14 288 bekannt. Solche Prüfgeräte dienen zur zeitraffenden Alterungsprüfung verschiedener Materialien. Diese Alterung wird im wesentlichen durch eine intensive UV-Bestrahlung der Proben hervorgehoben. Um eine gute Korrelation zur natürlichen Freibewitterung zu erhalten, muß die spektrale Energieverteilung des Lichtes möglichst derjenigen der natürlichen Sonnenstrahlung entsprechen. Üblicherweise werden in solchen Geräten als Strahlenquellen Xenonstrahler eingesetzt, die jedoch einen hohen Strahlungsanteil im IR-Bereich, d.h. zwischen 700 bis 1000 nm, emittieren. Um ein dem Tageslicht angenähertes Strahlenspektrum zu erreichen, ist es erforderlich, die IR-Strahlung wesentlich zu reduzieren, auch um die Temperatur an der Probe gering zu halten.

Das bekannte Gerät besitzt einen äußeren Filter in Form eines Zylindermantels, dessen Innenraum drei durch Spiegelflächen abgetrennte Bereiche aufweist. Jedem dieser abgetrennten Bereiche ist eine langgestreckte, in Achsrichtung des Zylinders verlaufende, freistehende Strahlenquelle zugeordnet, die neben UV-Strahlung und sichtbarer Strahlung auch einen großen Anteil an IR-Strahlung abgibt. Während die Spiegelflächen für IR-Strahlung durchlässig sind und die UV-Strahlung an der Oberfläche reflektieren, ist der Zylindermantel für UV-Strahlung und sichtbare Strahlung durchlässig, während die IR-Strahlung in den Innenraum des Zylinders reflektiert wird. Die durch die Spiegelflächen hindurchtretende IR-Strahlung wird im Innern der Anordnung absorbiert. In diesem Absorptionsraum sind Maßnahmen getroffen, um die entstehende Wärme abzuführen.

Ausgehend von dem vorstehend beschriebenen Stand der Technik liegt der vorliegenden Erfindung die Aufgabe zugrunde, eine einfach aufgebaute Anordnung anzugeben, die einen hohen Wirkungsgrad aufweist, d. h. die trotz des einfachen Aufbaues die Absorption eines hohen Anteiles an von der Strahlenquelle ausgehenden IR-Strahlung gewährleistet ohne Verminderung der nach außen abgegebenen UV-Strahlung.

Die Aufgabe wird dadurch gelöst, daß das Zentrum der Strahlenquelle bzw. die Achse der rohrförmigen Strahlenquelle in der Ebene der Fläche liegt, diese Ebene durch die Achse verläuft und die absorbierende Fläche sich durch die Achse des Filters verlaufend von der Innenfläche des Filters bis zur Strahlenquelle hin erstreckt.

Dadurch, daß die Strahlenquelle in der Ebene der mindestens einen IR-Strahlung absorbierenden Flächen liegt, wobei die Strahlenquelle nicht im Bereich der Achse des hohlzylindrischen Filters liegt, wird die gesamte von der Strahlenquelle abgegebene IR-Strahlung, die an dem zylindrischen Filter reflektiert wird, auf die mindestens eine absorbierende Fläche reflektiert und dort vernichtet, d. h. in Form von Wärme abgeführt. Andererseits trifft die von der Strahlenquelle abgegebene UV-Strahlung ungehindert auf den zylindrischen Filter, wo sie nach außen abgegeben wird. Diese Anordnung zeichnet sich durch ihren sehr einfachen Aufbau aus, da sie keine aufwendige Filter- und Spiegelanordnung benötigt. Der Bereich zwischen dem Zylindermantel und der Strahlenquelle, und zwar derjenige Bereich, der dem Bereich mit der an die Strahlenquelle heranreichenden absorbierenden Fläche gegenüberliegt, ist praktisch strahlungsfrei hinsichtlich der an der Zylinderinnenfläche des Filters reflektierten IR-Strahlung. In einer vorteilhaften Weitergestaltung des Licht- und Wetterechtheitsgerätes kann für Streustrahlung eine weitere absorbierende Fläche vorgesehen werden, die in der Ebene der anderen absorbierenden Fläche verläuft und die sich ebenfalls von der Strahlenquelle bis an die Innenfläche des zylindrischen Filters erstreckt. In dieser Anordnung wird der Innenraum des Filters in zwei Hälften gleicher Größe unterteilt. Bevorzugt sollte die Strahlenquelle derart innerhalb des zylindrischen Filters angeordnet sein, daß sie von der Innenfläche des Zylinders einen Abstand aufweist, der etwa einem Viertel des Innendurchmessers des Filters entspricht. Andererseits sollte die Achse der Strahlenquelle um mindestens den halben Außendurchmesser ihres Kolbens von der Achse des zylindrischen Filters versetzt sein, d. h. kein Teil der Strahlenquelle sollte die Achse des Zylinders schneiden oder tangieren. Mit dieser Dimensionierung des Gerätes wird erreicht, daß die gesamte von der Innenfläche des Filters reflektierte IR-Strahlung auf die absorbierende Fläche fällt.

Von Vorteil ist eine langgestreckte rohrförmige Strahlenquelle, deren Achse parallel zur Achse des rohrförmigen Filters verläuft. Hierdurch wird eine gleichmäßige Strahlungsintensität über die gesamte Längserstreckung des rohrförmigen Filters erreicht. Falls eine im wesentlichen punktförmige Strahlenquelle eingesetzt wird, sollte diese Strahlenquelle in der Mitte des Filters, d.h. in seiner halben Höhe, positioniert werden. Das Filter weist bevorzugt eine Beschichtung der Innenseite oder Außenseite aus einem dielektrischen Werkstoff auf, die sich durch gute Reflexionseigenschaften im IR-Bereich und gute Durchlässigkeit im UV- und sichtbaren Bereich auszeichnet.

In der nachfolgenden Beschreibung eines Ausführungsbeispiels anhand der Zeichnung wird die Erfindung näher erläutert. In der Zeichnung zeigt

Figur 1    eine erfindungsgemäße Bestrahlungsanordnung in einer perspektivischen Ansicht,

Figur 2    einen Querschnitt durch die Anordnung nach Figur 1.

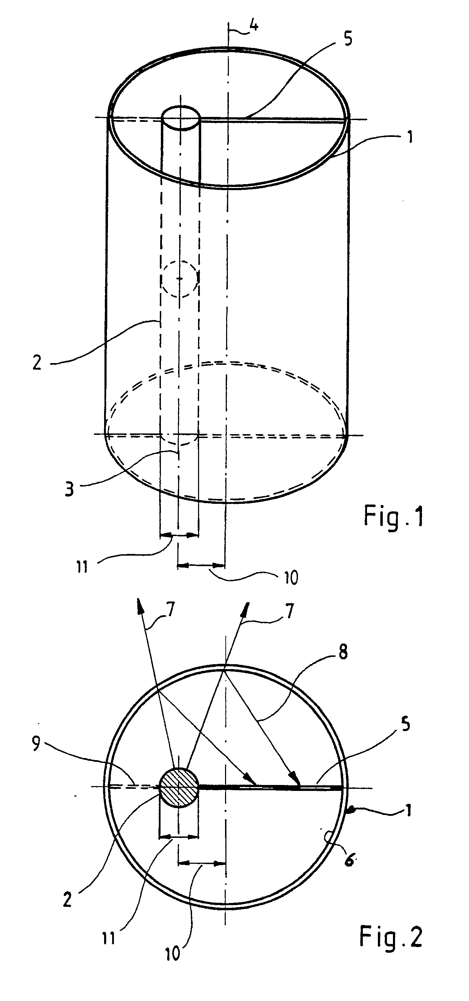

Die Bestrahlungsanordnung, die sich zum Einsatz in einem Licht- und Wetterechtheitsprüfgerät eignet, weist einen rohrförmigen, zylindrischen Filter 1 auf, der eine Strahlenquelle 2 umgibt. Die Strahlenquelle, die eine langgestreckte, rohrförmige Strahlenquelle ist, verläuft mit ihrer Achse 3 parallel zur Achse 4 des Filters 1 ausgerichtet. Die Strahlenquelle 2 verläuft hierbei mit Abstand zur Achse 4 des Filters 1. In der Ebene, die durch die Achse 3 der Strahlenquelle 2 und die Achse 4 des Filters 1 aufgespannt wird, ist eine ebene Fläche 5 angeordnet, die den Bereich zwischen der Strahlenquelle 2 und der Innenfläche des Filters durch die Achse 4 des Filters 1 verlaufend abschließt. Der andere Bereich zwischen der Strahlenquelle 2 und der Innenfläche des rohrförmigen Filters 1, durch den die durch die beiden Achsen 3 und 4 verlaufende Ebene führt, ist in der Anordnung nach Figur 1 frei. Im Querschnitt gesehen, so wie dies Figur 2 zeigt, verläuft die Fläche 5 in dem Bereich, der dem größten Abstand zwischen der Strahlenquelle und der Innenfläche des Filters 1 entspricht und der durch die Achse 4 des Filters führt. Die Innenfläche des Filters 1 ist mit einer Filterschicht 6 aus einem dielektrischen Werkstoff beschichtet, die dazu dient, die von der Strahlenquelle - bevorzugt ein Xenonstrahler - abgegebene Strahlung zu zerlegen, indem sie durchlässig ist für UV-Strahlung und sichtbare Strahlung, durch die Strahlen 7 angedeutet, während sie entsprechend den Strahlen 8 IR-Strahlung in den Innenraum reflektieren. Diese reflektierte IR-Strahlung trifft auf die absorbierende Fläche 5, beispielsweise ein geschwärztes ebenes Blech, an deren Oberfläche sie vernichtet wird. Zur Abfuhr der hierbei entstehenden Wärme kann diese absorbierende Fläche gekühlt werden. Gegebenenfalls kann, um gestreute IR-Strahlung im Bereich zwischen der Strahlenquelle 2 und der Innenfläche des Filters zu absorbieren, eine weitere absorbierende Fläche angeordnet werden, so daß sowohl die Fläche 9, die Fläche 5 und die Achse 3 der Strahlenquelle 2 in einer Ebene verlaufen, die ihrerseits durch die Achse 4 des Filters 1 verläuft. Die Strahlenquelle 2 ist derart angeordnet, daß ihre Achse 3 etwa einen Abstand 10 von der Achse 4 des Filters 1 aufweist, der dem eineinhalbfachen Durchmesser 11 der Strahlenquelle 2 entspricht. Durch die Anordnung der Strahlenquelle außerhalb der Achse 4 des zylindrischen Filters wird die gesamte an der Innenfläche des Filters 1 reflektierte IR-Strahlung auf die absorbierende Fläche 5 geworfen. Anstelle der rohrförmigen Strahlenquelle 2 kann, wie in Figur 1 durch den Kreis 12 angedeutet, eine punktförmige Strahlenquelle eingesetzt werden, die dann in etwa der halben Höhe des zylindrischen Filters 1 angeordnet sein sollte.

## Patentansprüche

1. Licht- und Wetterechtheitsprüfgerät mit einer Bestrahlungsanordnung, die eine rohr- oder punktförmige Strahlenquelle (2) aufweist, insbesondere einen Xenonstrahler, deren Kolben von einem rohrförmigen, zylindrischen Filter (1), der für den sichtbaren und UV-Anteil der von der Strahlenquelle (2) abgegeben Strahlung durchlässig ist und den IR-Anteil der Strahlung selektiv reflektiert, mit Abstand umgeben ist, wobei innerhalb des rohrförmigen Filters (1) mindestens eine IR-Strahlung absorbierende, ebene Fläche (5) vorgesehen ist, deren Ebene in Richtung der Achse (4) des Filters (1) verläuft und wobei die Strahlenquelle (2) außerhalb der Achse (4) des rohrförmigen Filters (1) angeordnet ist, dadurch gekennzeichnet, daß das Zentrum der Strahlenquelle bzw. die Achse (3) der rohrförmigen Strahlenquelle (2) in der Ebene der Fläche (5) liegt, diese Ebene durch die Achse (4) des Filters (1) verläuft und die absorbierende Fläche (5) sich - durch die Achse (4) des Filters (1) verlaufend - von der Innenfläche des Filters (1) bis zur Strahlenquelle (2) hin erstreckt.

2. Licht- und Wetterechtheitsprüfgerät nach Anspruch 1, dadurch gekennzeichnet, daß eine weitere absorbierende Fläche (9) vorgesehen ist, die in der Ebene verläuft und die sich an der der ersten Fläche (5) gegenüberliegenden Seite der Strahlenquelle (2) anschließend bis an die Innenfläche des Filters (1) erstreckt.

3. Licht- und Wetterechtheitsprüfgerät nach Anspruch 1 oder 2, dadurch gekennzeichnet, daß die Achse (3) oder der Mittelpunkt der Strahlenquelle (2) von der Achse (4) des Filters (1) um mindestens einen dem halben Außendurchmesser (11) der Strahlenquelle (2) entsprechenden Abstand (10) versetzt angeordnet ist.

4. Licht- und Wetterechtheitsprüfgerät nach einem der Ansprüche 1 bis 3, dadurch gekennzeichnet, daß der Mittelpunkt oder die Achse (3) der Strahlenquelle (2) maximal um ein Viertel des Innendurchmessers des Filters (1) von dessen Achse (4) versetzt angeordnet ist.

5. Licht- und Wetterechtheitsprüfgerät nach einem der Ansprüche 1 bis 4, dadurch gekennzeichnet, daß die Strahlenquelle eine rohrförmige Strahlenquelle (2) ist, deren Achse (3) parallel zur Achse (4) des rohrförmigen Filters (1) verläuft.

6. Licht- und Wetterechtheitsprüfgerät nach einem der Ansprüche 1 bis 5, dadurch gekennzeichnet, daß das rohrförmige Filter (1) eine Filterschicht (6) aus dielektrischem Werkstoff aufweist.

**Claims**

1. Light and weather resistance testing instrument having an irradiation arrangement with a tubular or point source of radiation (2), in particular a Xenon emitter, whose bulb is surrounded with clearance by a tubular cylindrical filter (1) which transmits the visible and UV component of the radiation emitted by the radiation source (2) and selectively reflects the IR component of the radiation, there being provided inside the tubular filter (1) at least one IR-radiation-absorbing plane surface (5) whose plane extends in the direction of the axis (4) of the filter (1), and wherein the radiation source (2) is disposed outside the axis (4) of the tubular filter (1), characterised in that the centre of the radiation source or the axis (3) of the tubular radiation source (2) lies in the plane of the surface (5), said plane runs through the axis (4) of the filter (1) and the absorbing surface (5) extends - passing through the axis (4) of the filter (1) - from the inner surface of the filter (1) to the radiation source (2).

2. Light and weather resistance testing instrument according to Claim 1, characterised in that a further absorbing surface (9) is provided, which runs in the plane and, adjoining the opposite side of the radiation source (2) to the first surface (5), extends up to the inner surface of the filter (1).

3. Light and weather resistance testing instrument according to Claim 1 or 2, characterised in that the axis (3) or the centre of the radiation source (2) is disposed offset from the axis (4) of the filter (1) by at least a distance (10) corresponding to half the external diameter (11) of the radiation source (2).

4. Light and weather resistance testing instrument according to one of Claims 1 to 3, characterised in that the centre or the axis (3) of the radiation source (2) is disposed offset, at most, by a quarter of the internal diameter of the filter (1) from the latter's axis (4).

5. Light and weather resistance testing instrument according to one of Claims 1 to 4, characterised in that the radiation source is a tubular source of radiation (2), whose axis (3) extends parallel to the axis (4) of the tubular filter (1).

6. Light and weather resistance testing instrument according to one of Claims 1 to 5, characterised in that the tubular filter (1) has a filter layer (6) made of dielectric material.

**Revendications**

1. Appareil d'essai de résistance à la lumière et aux intempéries, avec un arrangement d'irradiation présentant une source de rayonnement tubulaire ou ponctuelle (2), notamment un organe rayonnant au néon dont l'ampoule est entourée, avec un intervalle, par un filtre tubulaire cylindrique (1), lequel est transparent pour la partie visible et la partie UV du rayonnement émis par la source de rayonnement (2) et réfléchit sélectivement la partie IR du rayonnement, au moins une surface plane (5) absorbant un rayonnement IR étant prévue à l'intérieur du filtre tubulaire (1) et ayant son plan qui s'étend en direction de l'axe (4) du filtre (1), la source de rayonnement (2) étant agencée en dehors de l'axe (4) du filtre tubulaire (1), caractérisé par le fait que le centre de la source de rayonnement ou, selon le cas, l'axe (3) de la source de rayonnement tubulaire (2) se trouve dans le plan de la surface (5), ce plan passant par l'axe (4) du filtre (1) et la surface absorbante (5) s'étendant, en passant par l'axe (4) du filtre (1), de la surface interne du filtre (1) jusqu'à la source de rayonnement (2).

2. Appareil d'essai de résistance à la lumière et aux intempéries selon revendication 1, caractérisé par le fait qu'il est prévu une autre surface absorbante (9) qui s'étend dans le plan et qui, se raccordant au côté de la source de rayonnement (2) opposé à la première surface (5), s'étend jusqu'à la surface interne du filtre (1).

3. Appareil d'essai de résistance à la lumière et aux intempéries selon revendication 1 ou 2, caractérisé par le fait que l'axe (3) ou le centre de la source de rayonnement (2) est déporté par rapport à l'axe (4) du filtre (1), le déport correspondant à une distance (10) d'au moins la moitié du diamètre extérieur (11) de la source de rayonnement (2).

4. Appareil d'essai de résistance à la lumière et aux intempéries selon l'une des revendications 1 à 3, caractérisé par le fait que le centre ou l'axe (3) de la source de rayonnement (2) est déporté par rapport à l'axe (4) du filtre (1), le déport étant au maximum de 1/4 du diamètre intérieur du filtre (1).

5. Appareil d'essai de résistance à la lumière et aux intempéries selon l'une des revendications 1 à 4, caractérisé par le fait que la source de rayonnement est une source tubulaire (2) dont l'axe (3) est parallèle à l'axe (4) du filtre tubulaire.

6. Appareil d'essai de résistance à la lumière et aux intempéries selon l'une des revendications 1 à 5, caractérisé par le fait que le filtre tubulaire (1) présente une couche filtrante (6) en un matériau diélectrique.

Fig.1

Fig.2